(19) Europäisches Patentamt
European Patent Office
Office européen des brevets

(11) **EP 2 486 065 B1**

(12) **FASCICULE DE BREVET EUROPEEN**

(45) Date de publication et mention de la délivrance du brevet:
**24.12.2014 Bulletin 2014/52**

(21) Numéro de dépôt: **10770750.7**

(22) Date de dépôt: **07.10.2010**

(51) Int Cl.:
***C08C 19/25*** $^{(2006.01)}$ ***C08C 19/44*** $^{(2006.01)}$
***C08L 19/00*** $^{(2006.01)}$ ***B60B 1/00*** $^{(2006.01)}$

(86) Numéro de dépôt international:
**PCT/EP2010/065030**

(87) Numéro de publication internationale:
**WO 2011/042507 (14.04.2011 Gazette 2011/15)**

(54) **ELASTOMERE DIENIQUE FONCTIONNALISE ET COMPOSITION DE CAOUTCHOUC LE CONTENANT.**

FUNKTIONALISIERTES DIEN-ELASTOMER UND ZUSAMMENSETZUNG DAMIT

FUNCTIONALISED DIENE ELASTOMER AND COMPOSITION THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2009 FR 0957030**

(43) Date de publication de la demande:
**15.08.2012 Bulletin 2012/33**

(73) Titulaires:
- **COMPAGNIE GENERALE DES ETABLISSEMENTS MICHELIN**
**63000 Clermont-Ferrand (FR)**
- **MICHELIN Recherche et Technique S.A.**
**1763 Granges-Paccot (CH)**

(72) Inventeurs:
- **MARECHAL, Jean-Marc**
**F-63400 Chamalieres (FR)**
- **DE LANDTSHEER, Stéphanie**
**Moscou 115184 (RU)**
- **FAVROT, Jean-Michel**
**F-63800 Cournon D'auvergne (FR)**

(74) Mandataire: **Le Cam, Véronique Marie Christine**
**Manufacture Française des Pneumatiques Michelin**
**23 Place des Carmes-Déchaux**
**SGD/LG/PI - F35 - Ladoux**
**63040 Clermont-Ferrand Cedex (FR)**

(56) Documents cités:
**EP-A1- 1 122 281**
**EP-A1- 2 098 541**
**US-A1- 2004 254 301**
**US-B1- 6 228 908**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention est relative à un élastomère diénique fonctionnalisé spécifique. Cet élastomère fonctionnalisé présente un fluage à froid réduit sans pour autant dégrader les propriétés d'une composition de caoutchouc renforcée qui le contient, notamment ses propriétés hystérétiques.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que, par exemple, des sous-couches, des gommes de liaison entre caoutchoucs de différentes natures ou d'enrobage de renforts métalliques ou textiles, des gommes de flancs ou des bandes de roulement et obtenir des pneumatiques aux propriétés améliorées, notamment possédant une résistance au roulement réduite.

La réduction de l'hystérèse des mélanges est un objectif permanent qui doit toutefois se faire en conservant l'aptitude à la mise en oeuvre des mélanges.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante.

Dans le cadre de mélanges contenant une charge inorganique renforçante, il a notamment été proposé d'utiliser des polymères diéniques fonctionnalisés par des dérivés alcoxysilanes.

A titre d'illustration de cet art antérieur relatif à des charges inorganiques renforçantes, on peut par exemple citer le brevet américain US-A-5 066 721, qui décrit une composition de caoutchouc comprenant un polymère diénique fonctionnalisé par un alcoxysilane ayant au moins un reste alcoxyle non hydrolysable en mélange avec de la silice. On peut également citer les demandes de brevet EP-A-0 299 074 et EP-A-0 447 066 qui décrivent des polymères fonctionnalisés comportant des fonctions alcoxysilanes. Ces polymères fonctionnalisés ont été décrits dans l'art antérieur comme efficaces pour réduire l'hystérèse et améliorer la tenue à l'abrasion, cependant leurs propriétés restent insuffisantes pour permettre la mise en oeuvre de ces polymères dans des compositions destinées à constituer des bandes de roulement de pneumatiques. Par ailleurs, la formulation de ces polymères pose des problèmes d'évolution des macrostructures lors de l'élimination du solvant de polymérisation, ce qui conduit à une sévère dégradation des propriétés potentiellement intéressantes. En outre, cette évolution est très peu contrôlable.

La demande de brevet EP 0 778 311, EP 0 786 493 ou encore WO 9850462 a décrit une composition de caoutchouc renforcée à base d'un polymère diénique fonctionnalisé en extrémité de chaîne par une fonction silanol ou un bloc polysiloxane ayant au moins une extrémité silanol. Cet élastomère fonctionnalisé n'est pas sujet à des modifications structurelles pénalisantes dans le cadre de son utilisation ultérieure en pneumatique. La composition comprenant un tel élastomère fonctionnalisé présente en outre de bonnes propriétés d'hystérèse.

Plus récemment, la demande de brevet WO 2009/077837 décrit des élastomères fonctionnalisés en une extrémité de chaîne par une fonction silanol ou un bloc polysiloxane ayant au moins une extrémité silanol, et fonctionnalisés à l'autre extrémité de chaîne. Ces élastomères sont également décrits comme pouvant être associés à des élastomères étoilés, particulièrement par du silicium. Toutefois, les associations illustrées conduisent à une composition de caoutchouc renforcée dont le compromis de propriétés mise en oeuvre et hystérèse n'est pas satisfaisant pour une application en pneumatique.

Lorsqu'on utilise un élastomère fonctionnalisé en extrémité de chaîne par une fonction silanol ou un bloc polysiloxane ayant au moins une extrémité silanol en mélange avec de la silice comme charge renforçante, on constate une rigidification du mélange. Cette rigidification qui se traduit par une dégradation de la fabrication et/ou de la capacité de mise en oeuvre de la composition, conduit à une baisse de la productivité. Pour remédier à cette rigidification des mélanges, il est notamment possible de réajuster le Mooney de l'élastomère pour obtenir *in fine* un mélange aux propriétés de mise en oeuvre acceptable, notamment en vue de l'extrusion du mélange pour fabriquer des produits semi-finis destinés aux pneumatiques, comme des bandes de roulement par exemple. Mais, la baisse du Mooney de l'élastomère n'est pas sans effet sur les propriétés de l'élastomère et conduit plus particulièrement à une tendance pour l'élastomère de présenter un fluage à froid important. Ce fluage ou écoulement à froid (i.e. cold flow) traduit l'aptitude des élastomères à s'écouler sous une charge égale à leur propre poids notamment lorsque des échantillons ou balles de ces élastomères sont empilés les uns sur les autres dans des caisses de stockage. Ainsi, le fluage à froid peut entraîner des inconvénients importants lors du transport et du stockage des élastomères.

Le but de la présente invention est de fournir un élastomère qui confère à une composition de caoutchouc renforcée de bonnes propriétés d'hystérèse et de mise en oeuvre en vue d'une application en pneumatique, tout en présentant un fluage à froid réduit dans l'optique d'une meilleure tenue lors du stockage du caoutchouc. Il en résulte une minimisation du risque pour que les échantillons ou balles d'élastomères débordent des caisses, provoquant un effondrement de celles-ci et s'opposant a l'extraction des élastomères.

Les Inventeurs viennent de découvrir au cours de leurs recherches qu'un élastomère diénique fonctionnalisé composé d'un élastomère diénique fonctionnalisé en une extrémité de chaîne uniquement par une fonction silanol ou un bloc polysiloxane ayant une extrémité silanol et, dans une certaine proportion, d'un élastomère diénique couplé ou étoilé à base d'étain, confère à une composition de caoutchouc le contenant des propriétés de caoutchouterie, et en particulier les propriétés hystérétiques et de mise en oeuvre, tout à fait satisfaisantes et acceptables pour une utilisation en pneumatique, tout en présentant une résistance au fluage à froid significativement améliorée. Les propriétés de caoutchouterie de cette composition sont ainsi maintenues à un niveau équivalent de celles de compositions de l'art antérieur à base d'un unique élastomère fonctionnalisé en extrémité de chaîne par une fonction silanol. Ceci est d'autant plus inattendu que l'on pouvait s'attendre à une augmentation de l'hystérèse et de la mise en oeuvre de la composition de caoutchouc au profit de l'augmentation significative de la résistance au fluage à froid observé pour l'élastomère diénique fonctionnalisé qu'elle comprend.

L'invention concerne donc un élastomère diénique fonctionnalisé en extrémité de chaîne par une fonction silanol ou un bloc polysiloxane ayant une extrémité silanol et, dans une certaine proportion, étoilé ou couplé à l'étain.

Un autre objet de l'invention est une composition de caoutchouc renforcée par au moins une charge inorganique telle que la silice, comprenant un tel élastomère diénique fonctionnalisé

L'invention a également pour objet un pneumatique qui incorpore dans au moins un de ses éléments constitutifs une composition de caoutchouc renforcée selon l'invention

L'invention a aussi pour objet des procédés de réduction du fluage à froid d'un élastomère diénique monofonctionnel portant en une seule extrémité de chaîne une fonction silanol ou un bloc polysiloxane ayant une extrémité silanol, l'autre extrémité étant exempte de toute fonctionnalisation.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des % en poids. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente description, on entend par élastomère diénique fonctionnalisé un élastomère diénique qui comporte un groupement comprenant un ou plusieurs hétéroatomes.

Ce groupement peut se situer en bout de chaîne. On dira alors que l'élastomère diénique est fonctionnalisé en bout de chaîne. C'est généralement un élastomère obtenu par réaction d'un élastomère vivant sur un agent de fonctionnalisation, c'est à dire toute molécule au moins monofonctionnelle, la fonction étant tout type de groupement chimique connu par l'homme de l'art pour réagir avec un bout de chaîne vivant

Ce groupement peut se situer dans la chaîne élastomère principale linéaire. On dira alors que l'élastomère diénique est couplé ou encore fonctionnalisé en milieu de chaîne, par opposition à la position "en bout de chaîne" et bien que le groupement ne se situe pas précisément au milieu de la chaîne élastomère. C'est généralement un élastomère obtenu par réaction d'un élastomère vivant sur un agent de couplage, c'est à dire toute molécule au moins difonfonctionnelle, la fonction étant tout type de groupement chimique connu par l'homme de l'art pour réagir avec un bout de chaîne vivant.

Ce groupement peut être central auquel n chaînes élastomères (n>2) sont liées formant une structure en étoile de l'élastomère. On dira alors que l'élastomère diénique est étoilé. C'est généralement un élastomère obtenu par réaction d'un élastomère vivant sur un agent d'étoilage, c'est à dire toute molécule multifonfonctionnelle, la fonction étant tout type de groupement chimique connu par l'homme de l'art pour réagir avec un bout de chaîne vivant

Un premier objet de l'invention est donc un élastomère diénique fonctionnalisé caractérisé en ce qu'il est composé de 75 à 95% en poids d'élastomère diénique fonctionnalisé en extrémité de chaîne par une fonction silanol ou un bloc polysiloxane ayant une extrémité silanol et de 5 à 25% en poids d'élastomères diénique étoilé ou couplé à l'étain. Ces pourcentages s'entendent par rapport au poids total de l'élastomère diénique fonctionnalisé.

Selon l'invention, l'élastomère diénique fonctionnalisé portant en extrémité de chaîne une fonction silanol ou un bloc polysiloxane ayant une extrémité silanol est présent dans l'élastomère diénique fonctionnalisé selon des proportions allant de 75% à 95% en poids du poids total de l'élastomère fonctionnalisé, de préférence de 75% à 90% en poids, plus préférentiellement encore de 75% à 85% en poids, par exemple de 80% à 85% en poids.

A titre préférentiel de bloc polysiloxane ayant une extrémité silanol conviennent ceux répondant à la formule générale suivante:

$$\left[ -(SiR_1R_2O)_x-H \right]$$

dans laquelle:

- $R_1$ et $R_2$, identiques ou différents, représentent un groupe alkyle, cycloalkyle, aryle, alkaryle, aralkyle, vinyle ayant de 1 à 10 atomes de carbone, de préférence un groupe alkyle ayant 1 à 6 atomes de carbone, plus préférentiellement encore $R_1$ et $R_2$ représentent chacun un radical méthyle.
- x est un nombre entier allant de 1 à 1500 et préférentiellement de 1 à 50, plus préférentiellement encore x vaut 1.

Selon une variante préférentielle de l'invention, l'élastomère diénique fonctionnalisé portant en extrémité de chaîne une fonction silanol ou un bloc polysiloxane ayant une extrémité silanol est monofonctionnel. En d'autres termes, selon cette variante, l'élastomère diénique est fonctionnalisé en une seule extrémité de chaîne. L'autre extrémité de chaîne est libre et ne porte aucune fonction.

Selon l'invention, l'élastomère diénique étoilé ou couplé à l'étain est présent dans l'élastomère fonctionnalisé selon une quantité de 5% à 25% en poids du poids total de l'élastomère fonctionnalisé, préférentiellement allant de 10% à 25 % en poids, plus préférentiellement encore de 15 à 25 % en poids, par exemple 15 à 20% en poids. En effet, on observe une amélioration significative de la tenue au stockage de l'élastomère diénique fonctionnalisé selon l'invention pour une proportion d'au moins 5% en poids d'élastomère diénique étoilé ou couplé à l'étain. Au-delà de 25% en poids d'élastomère diénique étoilé ou couplé à l'étain, le compromis fluage à froid de l'élastomère/propriétés de caoutchouterie de la composition de caoutchouc est pénalisé du fait de l'augmentation de l'hystérèse.

Selon une variante préférentielle de l'invention et pour une meilleure résistance au fluage à froid, l'élastomère diénique est avantageusement étoilé à l'étain, c'est à dire que l'atome d'étain est lié à n chaînes élastomères (n>2) formant une structure en étoile de l'élastomère. Plus préférentiellement encore, quatre chaînes élastomères sont liées à l'étain; ce qui résulte en un élastomère étoilé à quatre branches.

Par élastomère diénique susceptible d'être mis en oeuvre conformément à l'invention, on entend tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatiques ayant de 8 à 20 atomes de carbone.

A titre de diènes conjugués conviennent notamment le butadiène-1,3, le 2-méthyl-1,3-butadiène, les 2,3-di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, etc...

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc...

Les copolymères peuvent contenir entre 99 % et 20 % en poids d'unités diéniques et de 1 % à 80 % en poids d'unités vinylaromatiques.

L'élastomère diénique fonctionnalisé conforme à l'invention est choisi préférentiellement dans le groupe des élastomères diéniques fortement insaturés constitué par les polybutadiènes (BR), les polyisoprènes (IR) de synthèse, les copolymères de butadiène, les copolymères d'isoprène et les mélanges de ces élastomères. De tels copolymères sont plus préférentiellement choisis parmi les copolymères de butadiène-styrène (SBR).

L'élastomère diénique fonctionnalisé peut avoir toute microstructure qui est fonction des conditions de polymérisation utilisées. L'élastomère peut être à blocs, statistiques, séquencés, microséquencés, etc... et être préparé en dispersion ou en solution. Lorsqu'il s'agit d'une polymérisation anionique, la microstructure de ces élastomères peut être déterminée par la présence ou non d'un agent modifiant et/ou randomisant et les quantités d'agent modifiant et/ou randomisant employées. L'élastomère diénique fonctionnalisé portant en extrémité de chaîne une fonction silanol ou un bloc polysiloxane ayant une extrémité silanol et l'élastomère diénique étoilé ou couplé à l'étain peuvent avoir la même microstructure ou une microstructure différente.

Conviennent notamment les polybutadiènes ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon ASTM D3418) entre -80°C et °0C et plus particulièrement entre -70°C et -10°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères

de butadiène-isoprène et notamment ceux ayant une teneur en isoprène comprise entre 5% et 90% en poids et une Tg de - 80°C à - 40°C, les copolymères isoprène-styrène et notamment ceux ayant une teneur en styrène comprise entre 5% et 50% en poids et une Tg comprise entre - 50°C et 0°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique-comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 70°C et 0°C.

Selon l'invention, l'élastomère diénique fonctionnalisé en extrémité de chaîne et l'élastomères diénique étoilé ou couplé à l'étain sont, avant leur fonctionnalisation, de même nature. Toutefois, il convient de noter que des élastomères non identiques mais qui sont considérés dans le domaine du pneumatique comme des élastomères similaires du fait d'effets techniques comparables, entrent également dans le cadre de l'invention.

La polymérisation de monomères diéniques est amorcée par un initiateur. En tant qu'initiateur de polymérisation, on peut utiliser tout initiateur anionique monofonctionnel connu. Toutefois un initiateur contenant un métal alcalin tel que le lithium est utilisé à titre préférentiel.

Comme initiateurs organolithiens conviennent notamment ceux comportant une liaison carbone-lithium. De préférence, on utilisera un initiateur organolithien hydrocarboné ne comportant pas d'hétéroatome. Des composés représentatifs sont les organolithiens aliphatiques tels que l'éthyllithium, le n-butyllithium (n-BuLi), l'isobutyllithium, les polyméthylènes dilithium tels que le 1,4-dilithiobutane, etc...

La polymérisation est, comme connu en soi, de préférence effectuée en présence d'un solvant inerte qui peut être par exemple un hydrocarbure aliphatique ou alicyclique comme le pentane, l'hexane, l'heptane, l'iso-octane, le cyclohexane ou un hydrocarbure aromatique comme le benzène, le toluène, le xylène.

La polymérisation peut être effectuée en continu ou en discontinu. On effectue généralement la polymérisation à une température comprise entre 20°C et 120°C et de préférence voisine de 30°C à 90°C. On peut bien entendu également ajouter en fin de polymérisation un agent de transmétallation pour modifier la réactivité de l'extrémité de chaîne vivante.

L'élastomère diénique vivant issu de la polymérisation est ensuite fonctionnalisé pour préparer l'élastomère diénique fonctionnalisé selon l'invention.

Selon une première variante de préparation de l'élastomère diénique fonctionnalisé selon l'invention, on mélange l'élastomère diénique fonctionnalisé en extrémité de chaîne par une fonction silanol ou un bloc polysiloxane ayant une extrémité silanol et l'élastomère diénique étoilé ou couplé à l'étain, dans les proportions appropriées.

L'élastomère diénique fonctionnalisé en extrémité de chaîne par une fonction silanol ou un bloc polysiloxane ayant une extrémité silanol peut être obtenu avantageusement selon les modes opératoires décrits dans la demande de brevet EP-A-0 778 311, dont la description est intégrée par référence.

L'élastomère diénique étoilé ou couplé à l'étain, peut être obtenu de manière connue en soi par réaction d'un dérivé de l'étain sur l'élastomère diénique vivant issu de la polymérisation. La préparation d'un tel élastomère diénique étoilé est par exemple décrit dans le brevet US3,393,182.

Le mélangeage des deux élastomères peut s'effectuer dans un solvant inerte par exemple un hydrocarbure aliphatique ou alicyclique comme le pentane, l'hexane, l'heptane, l'iso-octane, le cyclohexane ou un hydrocarbure aromatique comme le benzène, le toluène, le xylène, qui peut être le même que le solvant polymérisation. On effectuera alors le mélangeage à une température comprise entre 20°C et 120°C et de préférence voisine de 30°C à 90°C.

Selon une deuxième variante de préparation de l'élastomère diénique fonctionnalisé selon l'invention, l'élastomère diénique vivant issu de l'étape de polymérisation est soumis à la réaction d'un agent de couplage ou d'étoilage à base d'étain et à celle d'un agent de fonctionnalisation susceptible d'introduire en extrémité de chaîne polymérique la fonction silanol ou le bloc polysiloxane ayant une extrémité silanol.

A titre d'agent de fonctionnalisation susceptible d'introduire en extrémité de chaîne polymérique la fonction silanol ou le bloc polysiloxane ayant une extrémité silanol on peut citer les agents de type polysiloxane cyclique pour obtenir un élastomère possédant une extrémité SiO- et ce dans un milieu qui ne permet pas la polymérisation du dit cyclopolysiloxane. A titre de polysiloxanes cycliques on peut citer ceux répondant à la formule:

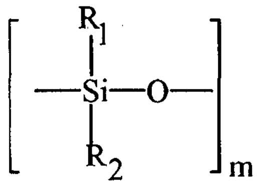

dans laquelle:

- $R_1$ et $R_2$ identiques ou différents, représentent un groupe alkyle, cycloalkyle, aryle, alkaryle, aralkyle, vinyle ayant de 1 à 10 atomes de carbone,
- m représente un nombre entier de valeur 3 à 8.

A titre de composés polysiloxanes cycliques préférentiels, on peut citer l'hexaméthylcyclotrisiloxane, le triméthyltriéthylcyclotrisiloxane, l'octaméthylcyclotétrasiloxane, le décaméthylcyclopentasiloxane ainsi que leurs mélanges.

A titre d'agents de couplage ou d'étoilage à l'étain, on peut citer les dérivés de l'étain de formule SnRxX4-x, x représentant un nombre entier de valeur 0 à 2, R représentant un radical alkyle, cycloalkyle, aryle, alkaryle, aralkyle, vinyle ayant de 1 à 10 atomes de carbone, de préférence un radical alkyle ayant de 1 à 4 atomes de carbone, et X est un atome d'halogène, de préférence le chlore. A titre de dérivés de l'étain préférentiels, on peut citer le dichlorure de dibutyl étain ou encore tétrachlorure d'étain, ce dernier étant tout particulièrement préféré. De la même manière, la fonctionnalisation peut être obtenue avec un agent de fonctionnalisation dérivé de l'étain pouvant répondre à la formule générale $(X^1{}_1R^1{}_2Sn)$-O-$(SnR^1{}_{3-y}X^1{}_y)$ ou $(X^1{}_1R^1{}_2Sn)$-O-$(CH2)_n$-O-$(SnR^1{}_{3-y}X^1{}_y)$, où y représente un entier de valeur 0 ou 1, $R^1$ représente un radical alkyle, cycloalkyle, aryle, alkaryle ou vinyle ayant de 1 à 12 atomes de carbone, de préférence un butyle, $X^1$ est un atome d'halogène, de préférence le chlore, et n représente un entier de 1 à 20, de préférence 4.

Ainsi, par exemple, la fonctionnalisation de l'élastomère diénique vivant issu de l'étape de polymérisation peut s'effectuer à une température variant de 30 à 120°C, en présence dans un premier temps d'une quantité appropriée d'un agent à base d'étain pour étoiler ou coupler 5% à 25% en poids de l'élastomère diénique vivant. Puis, dans un deuxième temps, on fonctionnalise les chaînes vivantes restantes de l'élastomère diénique obtenu après la première étape par adjonction d'un agent de fonctionnalisation susceptible d'introduire en extrémité de chaîne polymérique la fonction silanol ou le bloc polysiloxane ayant une extrémité silanol et réaction avec cet agent. La réaction de fonctionnalisation de l'élastomère diénique est ensuite stoppée par la désactivation des chaînes vivantes restantes et par réaction des extrémités de chaînes en $SiO^-$ avec un composé donneur de protons pour conduire à l'élastomère diénique fonctionnalisé selon l'invention.

L'élastomère diénique fonctionnalisé conforme à l'invention présente une résistance au fluage à froid améliorée. Ce qui induit une meilleure tenue lors du stockage et des transports de ce caoutchouc.

L'élastomère diénique fonctionnalisé conforme à l'invention peut être avantageusement utilisé dans une composition de caoutchouc renforcée par au moins une charge inorganique telle que la silice, dont il maintient les propriétés dynamiques et de mise en oeuvre à un niveau satisfaisant pour une application en pneumatique. Cette composition de caoutchouc fait également l'objet de l'invention.

Selon l'invention, la composition de caoutchouc est à base d'au moins une charge renforçante comprenant une charge inorganique, et d'une matrice élastomère comprenant l'élastomère diénique fonctionnalisé décrit ci-dessus.

L'élastomère diénique fonctionnalisé conformément à l'invention est présent dans la composition de caoutchouc dans des proportions allant de 10 à 100 pce (parties en poids pour cent partie en poids d'élastomère).

Selon une variante de l'invention, l'élastomère diénique fonctionnalisé est présent dans la matrice élastomère selon une fraction pondérale majoritaire. Dans le cadre de l'invention, on entend par fraction pondérale majoritaire, la fraction pondérale la plus élevée de la matrice, de préférence une fraction pondérale d'au moins 50%. La fraction pondérale s'entend par rapport au poids total de la matrice élastomère. L'élastomère diénique fonctionnalisé conformément à l'invention est alors présent dans la matrice élastomère selon une quantité allant de 50 à 100 pce, préférentiellement 60 à 100 pce.

La matrice élastomère peut également comprendre, outre l'élastomère diénique fonctionnalisé défini ci-dessus, au moins un élastomère diénique conventionnellement utilisé dans les pneus tel que du caoutchouc naturel ou un élastomère synthétique, ou encore un autre élastomère diénique fonctionnalisé, couplé ou étoilé. Ce ou ces autres élastomères diéniques sont présents dans la matrice dans des proportions allant de 0 à 90 pce, voire, selon la variante ci-dessus, dans des proportions allant de 0 à 50 pce.

La composition de caoutchouc selon l'invention comprend outre la matrice élastomère, au moins une charge renforçante comprenant une charge inorganique. Par "charge inorganique", doit être entendu dans la présente demande, par définition, toute charge inorganique ou minérale quelles que soient sa couleur et son origine (naturelle ou de synthèse),

encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface. Par "charge inorganique ", on entend également tout mélange de ces charges.

Préférentiellement, la charge inorganique renforçante est, en totalité ou tout du moins majoritairement, de la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, même si les silices précipitées hautement dispersibles sont préférées. A titre de charge inorganique renforçante, on citera également les charges minérales du type alumineuse, en particulier de l'alumine ($Al_2O_3$) ou des (oxyde)hydroxydes d'aluminium, ou encore des oxydes de titane renforçants.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

On notera que la charge inorganique renforçante peut être coupée (mélangée) avec une charge organique, telle que du noir de carbone, constituant ainsi la charge renforçante de la composition selon l'invention.

Selon une mise en oeuvre préférentielle de l'invention, cette charge renforçante est majoritairement constituée de la charge inorganique renforçante, c'est-à-dire que la proportion de charge inorganique est supérieure à 50% en poids du poids total de la charge, le maximum étant 100%. Préférentiellement, la charge renforçante est constituée de 70% à 100% en poids de la charge inorganique.

Comme noirs de carbone conviennent tous les noirs de carbone, notamment les noirs du type HAF, ISAF, SAF, FF, FEF, GPF et SRF conventionnellement utilisés dans les composition de caoutchouc pour pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, mais aussi des noirs plus grossiers comme par exemple les noirs N550 ou N683. Les noirs de carbone pourraient être par exemple déjà incorporés au caoutchouc sous la forme d'un masterbatch.

Comme exemples de charges organiques autres que des noirs de carbone, on peut citer les charges organiques de polyvinylaromatique fonctionnalisé telles que décrites dans les demandes WO-A-2006/069792 et WO-A-2006/069793, ou encore les charges organiques de polyvinyl non aromatique fonctionnalisé telles que décrites dans les demandes WO-A-2008/003434 et WO-A-2008/003435.

Dans le cas où la charge renforçante contient une charge inorganique renforçante et du noir de carbone, la fraction pondérale de ce noir de carbone dans ladite charge renforçante est préférentiellement choisie inférieure ou égale à 30 % par rapport au poids total de la charge renforçante, plus préférentiellement inférieur à 20 %.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte partiellement ou intégralement d'une couche inorganique telle que silice, ou bien comporterait à sa surface des sites fonctionnels, notamment hydroxyles, nécessitant l'utilisation d'un agent de couplage pour établir la liaison entre la charge et l'élastomère. Conviennent également les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

Avantageusement, la composition selon l'invention comprend de 35 à 200 pce de charge renforçante. De manière préférentielle, le taux de charge renforçante est compris entre 40 et 140 pce, plus préférentiellement entre 50 et 130 pce, l'optimum étant, de manière connue, différent selon les applications particulières visées; notamment en pneumatique le niveau de renfoncement attendu sur un pneumatique vélo, par exemple, est bien sûr inférieur à celui exigé sur un pneumatique apte à rouler à grande vitesse de manière soutenue, par exemple un pneumatique moto, un pneumatique pour véhicule de tourisme ou pour véhicule utilitaire tel que Poids lourd.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

- (I) Z-A'-Sx-A'-Z , dans laquelle:
- x est un entier de 2 à 8 (de préférence de 2 à 5) ;
- A' est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après:

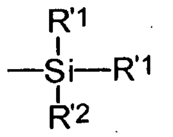 ; 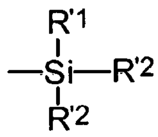 ; 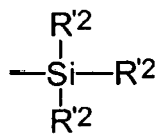 ,

dans lesquelles:

- les radicaux R'1, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux R'2, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevet WO 02/30939 (ou US 6,774,255) et WO 02/31041 (ou US 2004/051210), ou encore des silanes ou POSS porteurs de groupements fonctionnels azo-dicarbonyle, tels que décrits par exemple dans les demandes de brevet WO 2006/125532, WO 2006/125533, WO 2006/125534.

Dans les compositions conformes à l'invention, le taux d'agent de couplage est avantageusement inférieur à 20 pce, étant entendu qu'il est en général souhaitable d'en utiliser le moins possible. Son taux est préférentiellement compris entre 0,5 et 12 pce, plus préférentiellement de 3 à 10 pce. Typiquement, le taux d'agent de couplage représente au moins 0,5% et au plus 15% en poids par rapport à la quantité de charge inorganique, de préférence au plus 12% et plus particulièrement au plus 10%..

Les compositions de caoutchouc conformes à l'invention peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des charges non renforçantes, des agents de protection tels que cires anti-ozone, anti-ozonants chimiques, anti-oxydants, des agents anti-fatigue, des agents plastifiants, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

Les compositions de l'invention peuvent également comporter, à titre d'agent plastifiant préférentiel non aromatique ou très faiblement aromatique, au moins un composé choisi dans le groupe constitué par les huiles naphténiques, paraffiniques, huiles MES, huiles TDAE, les plastifiants esters (par exemple les trioléates de glycérol), les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés. Le taux global en agent plastifiant est de préférence d'au moins 10 et d'au plus 100 pce, plus préférentiellement au plus 80 pce, voire au plus 70 pce. Selon un autre aspect préférentiel, la composition comprend un système plastifiant composé d'au moins une huile MES ou TDAE et d'au moins une résine haute Tg, chacun des composants étant présent par exemple dans

des quantités allant de 5 à 35 pce.

La composition de caoutchouc conforme à l'invention peut être préparée selon un procédé qui comporte au moins les étapes suivantes:

(i) la réalisation, à une température maximale comprise entre 130 °C et 200 °C, d'un premier temps de travail thermomécanique (parfois qualifié de phase " non productive ") des constituants de base nécessaires, à l'exception du système de réticulation, de ladite composition comprenant la matrice élastomère et une charge renforçante, puis
(ii) la réalisation, à une température inférieure à ladite température maximale dudit premier temps, de préférence inférieure à 120 °C, d'un second temps de travail mécanique au cours duquel est incorporé ledit système de réticulation.

La composition de caoutchouc ainsi obtenue peut ensuite avantageusement être extrudée ou calandrée de manière connue en soi, sous la forme désirée, pour fabriquer des semi-finis tels que des bandes de roulement.

Ce procédé peut également comprendre, préalablement à la réalisation des étapes (i) et (ii) précitées, les étapes de la préparation de la matrice élastomère et plus particulièrement celles de la préparation de l'élastomère diénique fonctionnalisé selon l'invention.

L'invention a également pour objet un pneumatique qui incorpore dans au moins un de ses éléments constitutifs une composition de caoutchouc renforcée selon l'invention, et plus particulièrement l'invention a pour objet des articles semi-finis d'un pneumatique qui comprennent cette composition.

En raison de la résistance au fluage à froid qui caractérise l'élastomère diénique fonctionnalisé selon l'invention, on notera que le stockage et le transport de cet élastomère sont sensiblement améliorés par rapport à un élastomère dépourvu d'étoile.

En outre, en raison d'un bon compromis de propriétés de caoutchouterie et plus particulièrement d'une mise en oeuvre et d'une hystérèse satisfaisantes, on comprend que l'utilisation de la composition de caoutchouc comprenant l'élastomère diénique fonctionnalisé selon l'invention, pour la fabrication d'une bande de roulement procure au pneumatique la contenant une résistance au roulement d'un niveau convenable. L'invention a donc plus particulièrement pour objet une bande de roulement de pneumatique qui est telle qu'elle comprend une composition de caoutchouc renforcée selon l'invention ou bien qui est telle qu'elle est exclusivement constituée de cette composition.

L'invention a également pour objet un procédé de réduction du fluage à froid d'un élastomère diénique monofonctionnel portant en une seule extrémité de chaîne une fonction silanol ou un bloc polysiloxane ayant une extrémité silanol, l'autre extrémité étant exempte de toute fonctionnalisation. Ce procédé consiste préalablement au conditionnement de l'élastomère, à le modifier par ajout d'un élastomère diénique couplé ou étoilé à l'étain dans une proportion de 5 à 35% en poids par rapport au poids de l'élastomère diénique monofonctionnel, de manière à obtenir un élastomère diénique fonctionnalisé dont 75% à 95% en poids porte en une seule extrémité de chaîne une fonction silanol ou un bloc polysiloxane ayant une extrémité silanol, l'autre extrémité étant exempte de toute fonctionnalisation, et 5% et 25% en poids est étoilé ou couplé à l'étain.

L'invention a également pour objet un rocédé de réduction du fluage à froid d'un élastomère diénique monofonctionnel portant en une seule extrémité de chaîne une fonction silanol ou un bloc polysiloxane ayant une extrémité silanol, l'autre extrémité étant exempte de toute fonctionnalisation. Ce procédé consiste lors de synthèse de l'élastomère diénique, à l'issu de l'étape de polymérisation, à réaliser un couplage ou un étoilage de 5 à 25% en poids de l'élastomère vivant avec un composé à base d'étain, puis à fonctionnaliser des 75 à 95% en poids d'élastomère vivant restant avec un agent de fonctionnalisation susceptible d'introduire la fonction silanol ou le bloc polysiloxane ayant une extrémité silanol.

Les caractéristiques précitées de la présente invention, ainsi que d'autres, seront mieux comprises à la lecture de la description suivante de plusieurs exemples de réalisation de l'invention, donnés à titre illustratif et non limitatif.

## EXEMPLES

### <u>I Préparation d'une matrice élastomère selon l'invention.</u>

#### 1) <u>Mesures et tests utilisés - Techniques expérimentales utilisées pour la caractérisation avant cuisson des polymères obtenus :</u>

(a) Détermination de la distribution de masses molaires par la technique de chromatographie d'exclusion stérique (SEC conventionnelle)

La technique SEC (chromatographie d'exclusion par la taille) a été utilisée pour déterminer les distributions de masses moléculaires relatives à des échantillons de ces polymères. A partir de produits étalons dont les caractéristiques sont

décrites dans l'exemple 1 du document de brevet européen EP-A-692 493, cette technique a permis d'évaluer pour un échantillon une masse moléculaire en nombre (Mn) qui a une valeur relative, à la différence de celle déterminée par osmométrie, ainsi qu'une masse moléculaire moyenne en poids (Mw). L'indice de polydispersité (Ip = Mw/Mn) de cet échantillon a ensuite été « déduit », calculé via un étalonnage dit de MOORE.

Selon cette technique, les macromolécules sont séparées physiquement suivant leurs tailles respectives à l'état gonflé, dans des colonnes remplies d'une phase stationnaire poreuse. Avant de mettre en oeuvre cette séparation, l'échantillon de polymère est solubilisé dans du tétrahydrofurane à une concentration d'environ 1 g/l. Puis la solution est filtrée sur filtre de porosité 0,45 μm avant injection.

On utilise pour la séparation précitée un chromatographe commercialisé sous la dénomination « WATERS Alliance 2690 » muni d'un dégazeur en ligne. Le solvant d'élution est le tétrahydrofurane, le débit est de 1 ml/min, la température du système est de 35 °C et la durée d'analyse est de 30 min. Un jeu de deux colonnes « WATERS » montées en série est utilisé dont le type est « STYRAGEL HT6E ».

| *Numéno* | *Marque* | *Domaine de masses molaires (g/mol)* | *Longueur (mm)* | *Diamètre interne (mm)* | *Taille des particules (μm)* | *Désignation commerciale* | *Références (à titre indicatif)* |
|---|---|---|---|---|---|---|---|
| Colonne 1 | WATERS | 2 000 - $10^7$ | 300 | 7,8 | 10 | Styragel HT6E | WAT044219 |
| Colonne 2 | WATERS | 2 000 - $10^7$ | 300 | 7,8 | 10 | Styragel HT6E | WAT044219 |

Le volume injecté de la solution d'échantillon de polymère est de 100 μl. Le détecteur est un réfractomètre différentiel « WATERS » dont le modèle est « 2410 ». Un logiciel d'exploitation des données chromatographiques est utilisé, dont la dénomination commerciale est « WATERS EMPOWER ».

Les masses molaires moyennes calculées sont relatives à une courbe d'étalonnage réalisée pour des SBR de microstructure suivante : 25 % massique de motifs type styrène, 23 % massique de motifs type -1,2 et 50 % massique de motifs type -1,4 trans.

(b) Pour les polymères et les compositions de caoutchouc, les viscosités Mooney ML (1+4) à 100 °C sont mesurées selon la nonne ASTM D-1646.

Un consistomètre oscillant est utilisé tel que décrit dans la norme ASTM D-1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en «unité Mooney » (UM, avec 1 UM = 0,83 N.m).

(c) Les températures de transition vitreuse Tg des polymères sont mesurées au moyen d'un calorimètre différentiel (« differential scanning calorimeter »).

(d) La fonctionnalisation $CH_3Si(SBR)_2OH$ en milieu de chaîne ou $SBR(CH_3)_2SiOH$ en bout de chaîne est caractérisée par RMN 2D $^1H$-$^{29}Si$ et quantifiée par RMN$^1H$.

Le spectre RMN 2D $^1H$-$^{29}Si$ permet de vérifier la nature de la fonction grâce aux valeurs de déplacements chimiques des noyaux Silicium et des protons au voisinage $^2J$ (via 2 liaisons). Elle utilise une valeur de constante de couplage $^2J_{1H-29Si}$ de 8 Hz. Le déplacement chimique du silicium de l'espèce $SBR(CH_3)_2SiOH$ en bout de chaîne est d'environ 11-12 ppm.

Le spectre RMN $^1H$ permet de quantifier la fonction par intégration du signal caractéristique des protons du groupement Méthyl porté par le silicium $CH_3Si$, situé autour de $\delta = 0$ ppm. Les échantillons sont solubilisés dans le sulfure de carbone ($CS_2$). 100 μL de cyclohexane deutéré ($C_6D_{12}$) sont ajoutés pour le signal de lock. Les analyses RMN sont réalisées sur un spectromètre 500 MHz BRUKER équipé d'une sonde « large bande » BBI 5 mm. Pour l'expérience RMN $^1H$ quantitative, la séquence utilise une impulsion 30° et un délai de répétition de 2 secondes.

(e) La technique RMN $^{13}C$ (Beebe, D. H. Polymer 1978, 19, 231-33 ou Bradbury, J. H.; Elix, J. A.; Perera, M. C. S. Journal of Polymer Science 1988, 26, 615-26) est utilisée pour déterminer la microstructure des élastomères obtenus. Les analyses RMN $^{13}C$ sont réalisées sur un spectromètre 250 MHz BRUKER équipé d'une sonde DUAL $^{13}C$-$^1H$ 10 mm. L'élastomère est solubilisé dans $CDCl_3$ à une concentration d'environ 75 g/L. L'expérience RMN $^{13}C$ quantitative, utilise une séquence avec découplage $^1H$ et suppression de l'effet Overhauser (inverse gated $^1H$-decoupling), une impulsion 90° et un délai de répétition = 6 s. La largeur spectrale est 200 ppm, le nombre de scans est 8192. Les spectres sont calibrés sur le pic central du triplet du $CDCl_3$ à 77 ppm.

(f) Pour les polymères, la viscosité inhérente à 25 °C d'une solution de polymère à 0,1 g/dl dans le toluène, est mesurée

à partir d'une solution de polymère sec : PRINCIPE :
La viscosité inhérente est déterminée par la mesure du temps d'écoulement t de la solution de polymère et du temps d'écoulement to du toluène, dans un tube capillaire.
Dans un tube Ubbelhode (diamètre du capillaire 0.46 mm, capacité 18 à 22 ml), placé dans un bain thermostaté à 25 ± 0,1 °C, le temps d'écoulement du toluène et celui de la solution polymère à 0,1 g/dl sont mesurés.
La viscosité inhérente est obtenue par la relation suivante :

$$\eta_{inh} = \frac{1}{C}\ln\left[\frac{(t)}{(t_o)}\right]$$

avec :

**C** : concentration de la solution toluénique de polymère en g/dl ;
**t** : temps d'écoulement de la solution toluénique de polymère en secondes ;
**$t_o$** : temps d'écoulement du toluène.en secondes ;
$\eta_{inh}$ : viscosité inhérente exprimée en dl/g.

(g) Pour les polymères le cold flow : CF100(1+6) est issu de la méthode de mesure suivante :
Il s'agit de mesurer le poids de gomme extrudé à travers une filière calibrée pendant un temps donné (6 heures), dans des conditions fixées (à 100°C). La filière a un diamètre de 6,35 mm pour une épaisseur de 0,5 mm.
L'appareillage de cold-flow est une coupe cylindrique, percée au fond. On place dans ce dispositif environ 40g ± 4g de gomme préalablement préparée sous forme de pastille (2 cm d'épaisseur et 52 mm de diamètre). Sur la pastille de gomme, on positionne un piston calibré de 1 kg ( ± 5 g). L'ensemble est ensuite placé dans une étuve, stabilisée thermiquement à 100°C ± 0,5 °C.
Pendant la première heure en étuve, les conditions de mesures ne sont pas stabilisées. Après une heure, on découpe donc le produit qui s'est extrudé et on le jette.
La mesure dure ensuite 6 heures ± 5 mn, pendant lesquelles le produit est laissé en étuve. A la fin des 6 heures, il faut récupérer l'échantillon de produit extrudé en le découpant au ras de la surface du fond. Le résultat de l'essai est le poids de gomme pesé en grammes.

**2) Préparation d'un copolymère A fonctionnalisé SiOH en bout de chaîne :**

On introduit en continu dans un réacteur de 32,5 1 équipé d'un agitateur de type turbine du cyclohexane, du butadiène, du styrène et du tetrahydrofurfuryl éthyle éther, selon des débits massiques respectifs de 100 / 11 / 3,2 / 0,037. On introduit en entrée de ligne 200 micromoles de n-butyllithium (n-BuLi) pour 100 g de monomères afin de neutraliser les impuretés protiques apportées par les différents constituants présents dans l'entrée de ligne. A l'entrée du réacteur, on introduit 530 µmol de n-BuLi pour 100 g de monomères.
On ajuste les différents débits de telle sorte que le temps de séjour moyen dans le réacteur soit de 40 min. La température est maintenue à 80 °C.
Le taux de conversion, qui est mesuré sur un prélèvement réalisé en sortie de réacteur, est de 98 %.
Enfin, en sortie de réacteur, on ajoute à la solution de polymère vivant (sur mélangeur statique en ligne) 265 micromoles pour 100 g de monomères d'hexaméthylcyclotrisiloxane en solution dans le cyclohexane. Puis on soumet le copolymère à un traitement anti-oxydant, à l'aide de 0,8 pce de 2,2'-méthylène-bis(4-méthyl-6-tertiobutylphénol) et de 0.2 pce de N-(1,3-diméthylbutyl)-N'-phényl-p-phénylènediamine.
On sépare le copolymère ainsi traité de sa solution par une opération de stripping à la vapeur d'eau, puis on le sèche sur un outil à cylindres à 100 °C pendant 20 min, pour obtenir le copolymère fonctionnalisé SiOH en extrémité de chaîne.
La viscosité ML de ce copolymère A est de 53. La masse moléculaire du copolymère, déterminée par SEC conventionnelle, est de 123 000 g/mol, l'Ip est de 2,0.
La microstructure de ce copolymère A est déterminée par RMN $^{13}C$.
Le bloc SBR de ce copolymère A contient 25 % de styrène (en masse) et, pour sa partie butadiénique, 58% de motifs vinyliques, 21 % de motifs 1,4 cis et 21 % de motifs 1,4 trans.
L'analyse RMN 2D $^{1}H$-$^{29}Si$ permet de conclure à l'existence d'une fonction bout de chaîne SBR$(CH_3)_2$SiOH. Le taux de fonctions $(CH_3)_2$Si déterminé par RMN $^{1}H$ pour le copolymère A est de 5,85 mmol/kg.

3) **Préparation d'un copolymère B étoilé** à **l'étain** :

La synthèse du copolymère B est réalisée selon les conditions opératoires décrites à l'essai 1, sauf que du tétrachlorure d'étain est ajouté à la place de l'hexaméthylcyclotrisiloxane, 265 micromoles pour 100 g de monomères de tétrachlorure d'étain en solution dans le cyclohexane.

La viscosité ML du copolymère B est de 104. La masse moléculaire du copolymère, déterminée par SEC conventionnelle, est de 209 000 g/mol, l'Ip est de 2,1.

La microstructure de ce copolymère Best déterminée par RMN $^{13}C$.

Le bloc SBR de ce copolymère B contient 25 % de styrène (en masse) et, pour sa partie butadiénique, 58 % de motifs vinyliques, 21 % de motifs 1,4 cis et 21 % de motifs 1,4 trans.

4) **Préparation de matrices élastomères, mélanges du copolymère A et copolymère B** :

Dans un réacteur de 10 litres sont additionnés : 5kg de cyclohexane, 285 g de polymère A et 15 g de polymère B, ce mélange est placée à 60°C durant 5heures. On sépare le copolymère ainsi traité de sa solution par une opération de stripping à la vapeur d'eau, puis on le sèche sur un outil à cylindres à 100 °C pendant 20 min, pour obtenir le copolymère C.

| Copolymère | Copolymère A (g) | Copolymère B (g) | Mn SEC | Ip | Cold flow |
|---|---|---|---|---|---|
| C | 285 | 15 | 119000 | 2,0 | 1,83 |
| D | 270 | 30 | 119000 | 2,1 | 1,40 |
| E | 240 | 60 | 125000 | 2,0 | 0,84 |
| F | 210 | 90 | 129000 | 2,1 | 0,41 |

**II Exemples comparatifs de compositions de caoutchouc**

1) **Mesures et tests utilisés**

(h) La viscosité Mooney ML (large) et MS (small) (1+4) à 100° C: mesurée selon la norme ASTM: D-1646, intitulée " Mooney " dans les tableaux. Les résultats sont en données relatives: une augmentation par rapport au témoin à 100 indique une augmentation de la viscosité et donc une mise en oeuvre altérée.

(i) La dureté SHORE A: mesures effectuées selon la norme DIN 53505. Les résultats sont en données relatives: une augmentation par rapport au témoin à 100 indique une rigidité accrue.

(j) Les propriétés dynamiques $\Delta G^*$ et tan($\delta$)max sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10 Hz, dans les conditions normales de température (23°C) selon la nonne ASTM D 1349-99. On effectue un balayage en amplitude de déformation crête-crête de 0,1% à 50% (cycle aller), puis de 50% à 0,1% (cycle retour). Les résultats exploités sont le module complexe de cisaillement dynamique (G*) et le facteur de perte tan $\delta$. Pour le cycle retour, on indique la valeur maximale de tan $\delta$ observée (tan($\delta$)max), ainsi que l'écart de module complexe ($\Delta G^*$) entre les valeurs à 0,1% et 50% de déformation (effet Payne). Les résultats sont en données relatives: une augmentation par rapport au témoin à 100 indique une augmentation de l'hystérèse.

**Exemple 1**
**(Tg = -25°C)**

Les élastomères SBR C, SBR D, SBR E et SBR F ont été utilisés pour la préparation de compositions de caoutchouc C, D, E et F de type bande de roulement, comprenant chacune de la silice à titre de charge renforçante.

Chacune de ces compositions C, D, E et F présente la formulation suivante (exprimée en pce : parties pour cent parties d'élastomère) :

| | |
|---|---|
| BR (1) | 23 |

(suite)

| | |
|---|---|
| SBR | 77 |
| Silice (2) | 85 |
| Noir de carbone (3) | 4 |
| Plastifiant (4) | 12 |
| Plastifiant (5) | 18 |
| Silane (6) | 6.8 |
| Acide stéarique | 2 |
| DPG (7) | 1.6 |
| Cire anti ozone | 1.5 |
| ZnO | 1.5 |
| 6PPD (8) | 1.9 |
| soufre | 1.2 |
| accélérateur | 1.9 |
| *(1) = BR avec 4,3% de 1-2 ; 2, 7% de trans 1-4 ; 93% de cis 1-4 (Tg = - 106°C)<br>(2) = Silice " Zeosil 1165 MP " de la société Rhodia<br>(3) = N234<br>(4) = huile MES ("Catenex SNR" de Shell)<br>(5) = résine polylimonène ("Dercolyte L120" de la société DRT)<br>(6) = agent de couplage TESPT ("Si69" de la société Degussa)<br>(7) = diphénylguanidine ("Perkacit DPG" de la société Flexsys)<br>(8) = N-1,3-diméthylbutol-N-phénylparaphénylènediamine ("Santoflex 6-PPD" de la société Flexsys)<br>(9) = CBS ("Santocure" de Flexsys)* | |

Chacune des compositions suivantes est réalisée, dans un premier temps, par un travail thermo-mécanique, puis, dans un second temps de finition, par un travail mécanique.

On introduit successivement, dans un mélangeur interne de laboratoire de type "Banbury', dont la capacité est de 400 cm3, qui est rempli à 70% et dont la température initiale est d'environ 90°C, l'élastomère, les deux tiers de la silice, le noir, l'agent de couplage et la diphénylguanidine, puis, environ une minute plus tard, le reste de la charge renforçante, l'huile MES, la résine, l'antioxydant, l'acide stéarique et la cire anti-ozone, puis, environ deux minutes plus tard le monoxyde de zinc.

On conduit l'étape de travail thermo-mécanique pendant 4 à 5 minutes, jusqu'à une température maximale de tombée de 160°C environ.

Le premier temps précité de travail thermo-mécanique est ainsi réalisé, étant précisé que la vitesse moyenne des palettes lors de ce premier temps est de 50 t/min.

On récupère le mélange ainsi obtenu, on le refroidit puis, dans un mélangeur externe (homo-finisseur), on ajoute le soufre et l'accélérateur à 30°C, en mélangeant encore le tout pendant une durée de 3 à 4 minutes (second temps précité de travail mécanique). Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

**Tableau 1 :**

| Composition (%étoile) | A (0%) | C (5%) | D (10%) | E (20%) | F (30%) |
|---|---|---|---|---|---|
| Elastomère | SBR A | SBRC | SBRD | SBR E | SBR F |
| ML 1 +4 à 100°C élastomère | 50 | 53 | 53 | 56 | 59 |
| Cold Flow élastomère | 2.17 | 1.83 | 1.4 | 0.84 | 0.41 |
| **Propriétés à l'état non réticulé** | | | | | |
| ML (1+4) à 100°C | 100 | 99 | 105 | 104 | 101 |
| **Propriétés à l'état réticulé** | | | | | |
| Shore A | 100 | 103 | 106 | 104 | 102 |
| **Propriétés dynamiques en fonction de la déformation** | | | | | |
| tan(δ)max à 23°C | 100 | 105 | 105 | 106 | 107 |

On constate que la résistance au fluage à froid (Cold Flow) de l'élastomère diénique fonctionnalisé s'améliore de manière significative en augmentant le taux de copolymère étoilé à l'étain dans là composition de caoutchouc par rapport à une composition A qui n'en contient pas. En outre, on constate pour les compositions C, D et E un maintien de tan(δ)max à des valeurs acceptables, malgré l'augmentation du taux de copolymère étoilé à l'étain au détriment des copolymère fonctionnalisé en bout de chaîne par une fonction silanol.

Le compromis fluage à froid des élastomères - hystérèse de la composition est tout à fait satisfaisant pour les compositions C, D et E selon l'invention comprenant respectivement dans leur matrice élastomère 5%, 10% et 20% d'un copolymère étoilé à l'étain.

## Revendications

1. Elastomère diénique fonctionnalisé dont

   - 75% à 95% en poids de l'élastomère est monofonctionnel portant en une seule extrémité de chaîne une fonction silanol ou un bloc polysiloxane ayant une extrémité silanol, l'autre extrémité étant exempte de toute fonctionnalisation, et
   - 5% et 25% en poids de l'élastomère est étoilé ou couplé à l'étain.

2. Elastomère selon la revendication 1, **caractérisé en ce que** le bloc polysiloxane ayant une extrémité silanol répond à la formule:

$$\left[ -\!\!-(SiR_1R_2O)_x\!-\!H \right]$$

   dans laquelle:

   - $R_1$ et $R_2$, identiques ou différents, représentent un groupe alkyle, cycloalkyle, aryle, alkaryle, aralkyle, vinyle ayant de 1 à 10 atomes de carbone,
   - x est un nombre entier allant de 1 à 1500.

3. Elastomère selon la revendication 2, **caractérisé en ce que** $R_1$ et $R_2$, identiques ou différents, représentent un groupe alkyle ayant de 1 à 5 atomes de carbone.

4. Elastomère selon la revendication 1, **caractérisé en ce que** l'élastomère diénique fonctionnalisé est composé de 10% à 25% en poids d'un élastomère diénique étoilé ou couplé à l'étain.

5. Elastomère selon l'une quelconque des revendications 1 à 4, **caractérisé en ce que** l'élastomère diénique étoilé ou couplé à l'étain est un élastomère étoilé à l'étain.

6. Elastomère selon la revendication 5, **caractérisé en ce que** l'élastomère diénique étoilé à l'étain est un élastomère à quatre branches.

7. Elastomère selon l'une quelconque des revendications 1 à 6, **caractérisé en ce que** l'élastomère diénique est un copolymère de butadiène-styrène.

8. Composition de caoutchouc renforcée à base d'au moins une charge renforçante comprenant une charge inorganique et d'une matrice élastomère, **caractérisée en ce que** la matrice élastomère comprend au moins un élastomère diénique fonctionnalisé tel que décrit dans les revendications 1 à 7.

9. Composition selon la revendication 8, **caractérisée en ce que** la matrice élastomère comprend également au moins un élastomère diénique conventionnel.

10. Composition selon la revendication 8 ou 9, **caractérisée en ce que** la proportion de charge inorganique dans la charge renforçante est supérieure à 50% en poids par rapport au poids total de la charge renforçante.

11. Composition selon l'une quelconque des revendications 8 à 10, **caractérisée en ce que** la charge inorganique renforçante est constituée de silice.

12. Article semi-fini en caoutchouc pour pneumatique, **caractérisé en ce qu'**il comprend une composition de caoutchouc, réticulable ou réticulée, selon l'une quelconque des revendications 8 à 11.

13. Article semi-fini selon la revendication 12, **caractérisé en ce que** le dit article est une bande de roulement.

14. Pneumatique, **caractérisé en ce qu'**il comporte un article semi-fini selon la revendication 12 ou 13.

15. Procédé de réduction du fluage à froid d'un élastomère diénique monofonctionnel portant en une seule extrémité de chaîne une fonction silanol ou un bloc polysiloxane ayant une extrémité silanol, l'autre extrémité étant exempte de toute fonctionnalisation, **caractérisé en ce que** préalablement à son conditionnement on le modifie par ajout d'un élastomère diénique couplé ou étoilé à l'étain dans une proportion de 5 à 35% en poids par rapport au poids de l'élastomère diénique monofonctionnel.

16. Procédé de réduction du fluage à froid d'un élastomère diénique monofonctionnel portant en une seule extrémité de chaîne une fonction silanol ou un bloc polysiloxane ayant une extrémité silanol, l'autre extrémité étant exempte de toute fonctionnalisation, **caractérisé en ce que** lors de son procédé de synthèse à l'issu de l'étape de polymérisation, on réalise un couplage ou un étoilage de 5 à 25% en poids de l'élastomère vivant avec un composé à base d'étain, puis on poursuit par la fonctionnalisation des 75 à 95% en poids d'élastomère vivant restant avec un agent de fonctionnalisation susceptible d'introduire la fonction silanol ou le bloc polysiloxane ayant une extrémité silanol.

## Patentansprüche

1. Funktionalisiertes Dienelastomer, wobei:

   - 75 bis 95 Gew.-% des Elastomers monofunktionell sind und an einem einzigen Kettenende eine Silanolfunktion oder einen Polysiloxanblock mit einem Silanolende tragen, wobei das andere Ende frei von jeglicher Funktionalisierung ist, und
   - 5 bis 25 Gew.-% des Elastomers mit Zinn gekuppelt oder sternverzweigt sind.

2. Elastomer nach Anspruch 1, **dadurch gekennzeichnet, dass** der Polysiloxanblock mit einem Silanolende der folgenden Formel entspricht:

$$\left[ -(SiR_1R_2O)_x-H \right]$$

worin:

- $R_1$ und $R_2$ gleich oder verschieden sind und für eine Alkyl-, Cycloalkyl-, Aryl-, Alkaryl-, Aralkyl- oder Vinylgruppe mit 1 bis 10 Kohlenstoffatomen stehen,
- x für eine ganze Zahl im Bereich von 1 bis 1500 steht.

**3.** Elastomer nach Anspruch 2, **dadurch gekennzeichnet, dass** $R_1$ und $R_2$ gleich oder verschieden sind und für eine Alkylgruppe mit 1 bis 5 Kohlenstoffatomen stehen.

**4.** Elastomer nach Anspruch 1, **dadurch gekennzeichnet, dass** das funktionalisierte Dienelastomer aus 10 bis 25 Gew.-% eines mit Zinn gekuppelten oder sternverzweigten Dienelastomers besteht.

**5.** Elastomer nach einem der Ansprüche 1 bis 4, **dadurch gekennzeichnet, dass** es sich bei dem mit Zinn gekuppelten oder sternverzweigten Dienelastomer um ein mit Zinn sternverzweigtes Elastomer handelt.

**6.** Elastomer nach Anspruch 5, **dadurch gekennzeichnet, dass** es sich bei dem mit Zinn sternverzweigten Dienelastomer um ein Elastomer mit vier Verzweigungen handelt.

**7.** Elastomer nach einem der Ansprüche 1 bis 6, **dadurch gekennzeichnet, dass** es sich bei dem Dienelastomer um ein Butadien-Styrol-Copolymer handelt.

**8.** Verstärkte Kautschukzusammensetzung auf Basis von mindestens einem verstärkenden Füllstoff, umfassend einen anorganischen Füllstoff, und einer Elastomermatrix, **dadurch gekennzeichnet, dass** die Elastomermatrix ein funktionalisiertes Dienelastomer gemäß einem der Ansprüche 1 bis 7 umfasst.

**9.** Zusammensetzung nach Anspruch 8, **dadurch gekennzeichnet, dass** die Elastomermatrix außerdem mindestens ein konventionelles Dienelastomer umfasst.

**10.** Zusammensetzung nach Anspruch 8 oder 9, **dadurch gekennzeichnet, dass** der Anteil des anorganischen Füllstoffs an dem verstärkenden Füllstoff mehr als 50 Gew.-%, bezogen auf das Gesamtgewicht des verstärkenden Füllstoffs, beträgt.

**11.** Zusammensetzung nach einem der Ansprüche 8 bis 10, **dadurch gekennzeichnet, dass** der verstärkende anorganische Füllstoff aus Kieselsäure besteht.

**12.** Kautschuk-Halbzeug für Luftreifen, **dadurch gekennzeichnet, dass** es eine vernetzbare oder vernetzte Kautschukzusammensetzung nach einem der Ansprüche 8 bis 11 umfasst.

**13.** Halbzeug nach Anspruch 12, **dadurch gekennzeichnet, dass** es sich bei dem Halbzeug um eine Lauffläche handelt.

**14.** Luftreifen, **dadurch gekennzeichnet, dass** er ein Halbzeug nach Anspruch 12 oder 13 enthält.

**15.** Verfahren zur Verringerung des kalten Flusses eines monofunktionellen Dienelastomers, das an einem einzigen Kettenende eine Silanolfunktion oder einen Polysiloxanblock mit einem Silanolende trägt, wobei das andere Ende frei von jeglicher Funktionalisierung ist, **dadurch gekennzeichnet, dass** man es vor seiner Konditionierung durch Zugabe eines mit Zinn gekuppelten oder sternverzweigten Dienelastomers in einem Anteil von 5 bis 35 Gew.-%, bezogen auf das Gewicht des monofunktionellen Dienelastomers, modifiziert.

**16.** Verfahren zur Verringerung des kalten Flusses eines monofunktionellen Dienelastomers, das an einem einzigen Kettenende eine Silanolfunktion oder einen Polysiloxanblock mit einem Silanolende trägt, wobei das andere Ende frei von jeglicher Funktionalisierung ist, **dadurch gekennzeichnet, dass** man bei dem Verfahren zu seiner Synthese

am Ende des Polymerisationsschritts eine Kupplung oder Sternverzweigung von 5 bis 25 Gew.-% des lebenden Elastomers mit einer Verbindung auf Basis von Zinn durchführt und dann die 75 bis 95 Gew.-% verbliebenes lebendes Elastomer mit einem Funktionalisierungsmittel, das zur Einführung der Silanolfunktion bzw. des Polysiloxanblocks mit einem Silanolende befähigt ist, funktionalisiert.

## Claims

**1.** Functionalized diene elastomer, for which:

- from 75% to 95% by weight of the elastomer is monofunctional and carries, at just one chain end, a silanol functional group or a polysiloxane block having a silanol end, the other end being devoid of any functionalization, and
- from 5% to 25% by weight of the elastomer is coupled by or star-branched by tin.

**2.** Elastomer according to Claim 1, **characterized in that** the polysiloxane block having a silanol end corresponds to the formula:

$$\left[ -(SiR_1R_2O)_x-H \right]$$

in which:

- $R_1$ and $R_2$, which are identical or different, represent an alkyl, cycloalkyl, aryl, alkaryl, aralkyl or vinyl group having from 1 to 10 carbon atoms,
- x is an integer ranging from 1 to 1500.

**3.** Elastomer according to Claim 2, **characterized in that** $R_1$ and $R_2$, which are identical or different, represent an alkyl group having from 1 to 5 carbon atoms.

**4.** Elastomer according to Claim 1, **characterized in that** the functionalized diene elastomer is composed of 10% to 25% by weight of a diene elastomer coupled by or star-branched by tin.

**5.** Elastomer according to any one of Claims 1 to 4, **characterized in that** the diene elastomer coupled by or star-branched by tin is an elastomer star-branched by tin.

**6.** Elastomer according to Claim 5, **characterized in that** the diene elastomer star-branched by tin is an elastomer comprising four branches.

**7.** Elastomer according to any one of Claims 1 to 6, **characterized in that** the diene elastomer is a butadiene/styrene copolymer.

**8.** Reinforced rubber composition based on at least one reinforcing filler comprising an inorganic filler and on an elastomer matrix, **characterized in that** the elastomer matrix comprises at least one functionalized diene elastomer as described in Claims 1 to 7.

**9.** Composition according to Claim 8, **characterized in that** the elastomer matrix also comprises at least one conventional diene elastomer.

**10.** Composition according to Claim 8 or 9, **characterized in that** the proportion of inorganic filler in the reinforcing filler is greater than 50% by weight, with respect to the total weight of the reinforcing filler.

**11.** Composition according to any one of Claims 8 to 10, **characterized in that** the reinforcing inorganic filler is composed of silica.

12. Semifinished article made of rubber for tyres, **characterized in that** it comprises a crosslinkable or crosslinked rubber composition according to any one of Claims 8 to 11.

13. Semifinished article according to Claim 12, **characterized in that** the said article is a tread.

14. Tyre, **characterized in that** it comprises a semifinished article according to Claim 12 or 13.

15. Process for reducing the cold flow of a monofunctional diene elastomer carrying, at just one chain end, a silanol functional group or a polysiloxane block having a silanol end, the other end being devoid of any functionalization, **characterized in that**, prior to its conditioning, it is modified by addition of a diene elastomer coupled by or star-branched by tin in a proportion of from 5 to 35% by weight, with respect to the weight of the monofunctional diene elastomer.

16. Process for reducing the cold flow of a monofunctional diene elastomer carrying, at just one chain end, a silanol functional group or a polysiloxane block having a silanol end, the other end being devoid of any functionalization, **characterized in that**, during the process for the synthesis thereof, on conclusion of the polymerization stage, from 5 to 25% by weight of the living elastomer is coupled by or star-branched by a tin-based compound and then the process is continued by the functionalization of the 75 to 95% by weight of remaining living elastomer with a functionalization agent capable of introducing the silanol functional group or the polysiloxane block having a silanol end.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5066721 A
- EP 0299074 A
- EP 0447066 A
- EP 0778311 A
- EP 0786493 A
- WO 9850462 A
- WO 2009077837 A
- US 3393182 A
- WO 2006069792 A
- WO 2006069793 A
- WO 2008003434 A
- WO 2008003435 A
- WO 9637547 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 0210269 A
- WO 2005087859 A
- WO 2006061064 A
- WO 2007017060 A
- EP 692493 A


### Littérature non-brevet citée dans la description


- **BEEBE, D. H.** *Polymer,* 1978, vol. 19, 231-33
- **BRADBURY, J. H. ; ELIX, J. A. ; PERERA, M. C. S.** *Journal of Polymer Science,* 1988, vol. 26, 615-26